Europäisches Patentamt

European Patent Office

Office européen des brevets

(11) Publication number: **0 040 187**
**A2**

(12) # EUROPEAN PATENT APPLICATION

(21) Application number: **81850082.9**

(22) Date of filing: **12.05.81**

(51) Int. Cl.³: **B 25 B 25/00**
**B 21 F 15/06, F 16 G 11/02**
**D 07 B 1/18**

(30) Priority: **13.05.80 SE 8003571**

(43) Date of publication of application:
**18.11.81 Bulletin 81/46**

(84) Designated Contracting States:
**AT DE FR GB IT NL**

(71) Applicant: **Rohland, Bernhard**
**Lilla Bergsbogatan 1**
**S-431 38 Mölndal(SE)**

(72) Inventor: **Rohland, Bernhard**
**Lilla Bergsbogatan 1**
**S-431 38 Mölndal(SE)**

(74) Representative: **Ferkinghoff, Claes-Göran et al,**
**ALFONS HEDBERGS PATENTBYRA AB**
**Aschebergsgatan 35**
**S-411 33 Göteborg(SE)**

(54) **A tool for homogeneous compression of metal sleeves having an essentially circular cross-sectional shape about spliced parts of steel wire ropes.**

(57) A tool designed to compress metal sleeves (2) having an essentially circular cross-sectional shape, about spliced portions of steel wire ropes (1) for the purpose of forming a strong and secure bond. The tool comprises two tool sections (4,5).

The problem of avoiding deformation damages on the sleeve during the compression operation is solved in accordance with the invention in that the tool sections, (4,5) when moved close together, form a clamping grip (6,7) in the shape of an ellipse the smaller axis of which is positioned in the direction of movement of said tool sections (4,5) whereas the larger ellipse axis is positioned in the plane separating the two tool sections.

Fig.5

A Tool for Homogeneous Compression of Metal Sleeves having an Essentially Circular Cross-Sectional Shape about Spliced Parts of Steel Wire Ropes

The subject invention concerns a tool designed to effect homogeneous compression of metal sleeves, having an essentially circular cross-sectional shape, about spliced parts of steel wire ropes so as to form a secure bond between the wire rope and the sleeve.

Metal sleeves are used as rope clamps to secure spliced portions of steel wire ropes to form rope loops of the Flemisheye type. Steel wire ropes of this kind are commonly used as lifting tools in harbours and workshops.

A problem experienced when compressing the metal sleeves is that the latter often are damaged when exposed to the compression force that is necessary to ensure that a firm bond of the desired strength and homogeneity be obtained. Several different kinds of compression tools therefore have been developed to solve this problem as well as various methods to obtain as strong bonds as possible without causing damage to the metal sleeves.

The compression may be carried out by means of tools comprising two semi-circular tool sections which, when moved close together, have a smaller operning in cross-section than the sleeve before compression. In the compression operation the material of the sleeve often flows and some of it escapes to the outside of the tool sections before the latter have come fully together. Under particularly disadvantageous circumstances, the edges of the tool might engage the sleeve and prevent it from sliding into the tool interior. In such cases, the sleeve wall will be exposed to folding and even fissures and cracks may form. Damage of this kind can easily be avoided by using tool sections having a larger circular cross-sectional size. The disadvantage with the use of such larger tool sections is that the resulting clamping effect of the bond is insufficient.

With a view to obtain a stronger bond it has already been suggested to carry out the compression in two stages and with the aid of two different tools, of which the second one has a cross-sectional size that is smaller than that of the first one. Alternatively, a double tool having two different pairs of grip sections may be used. Because of the two-stage operation, the compression is, however, a comparatively time-consuming process.

In accordance with another suggested method described in GB Patent Specification No. 825 641 a compression tool is used consisting of four clamping grip sector members. These sector members are arranged to be moved together towards a common central point where they together delimit an opening having a circular cross--section. Compression tools of this kind are complicated in structure and consequently expensive.

The subject invention provides a compression tool by means of which one obtains accurate control of the sleeve compression process, thus ensuring maximum clamping effect (a homogeneous bond) without causing deformation damages to the sleeve.

The tool in accordance with the invention which tool is of a kind comprising two halves or sections, is characterised in that the tool sections, when moved close together, form a clamping grip in the shape of an ellipse the smaller axis of which is positioned in the direction of movement of the tool sections whereas the larger

3

ellipse axis is positioned in the plane separating the two tool sections.

In the following, the invention will be described in closer detail with reference to the accompanying drawings showing one embodiment of the tool in accordance with the invention.
In the drawings,

Fig. 1 illustrates in a perspective view a spliced steel wire having a sleeve mounted thereon,

Fig. 2 is a cross-sectional view along line II-II of Fig. 1,

Fig. 3 is a perspective view showing the steel wire with the sleeve pressed onto the wire in accordance with the teachings of the invention,

Fig. 4 is a cross-sectional view along line IV-IV of Fig. 3, and

Fig. 5 is a lateral view of a compression tool in accordance with the invention.

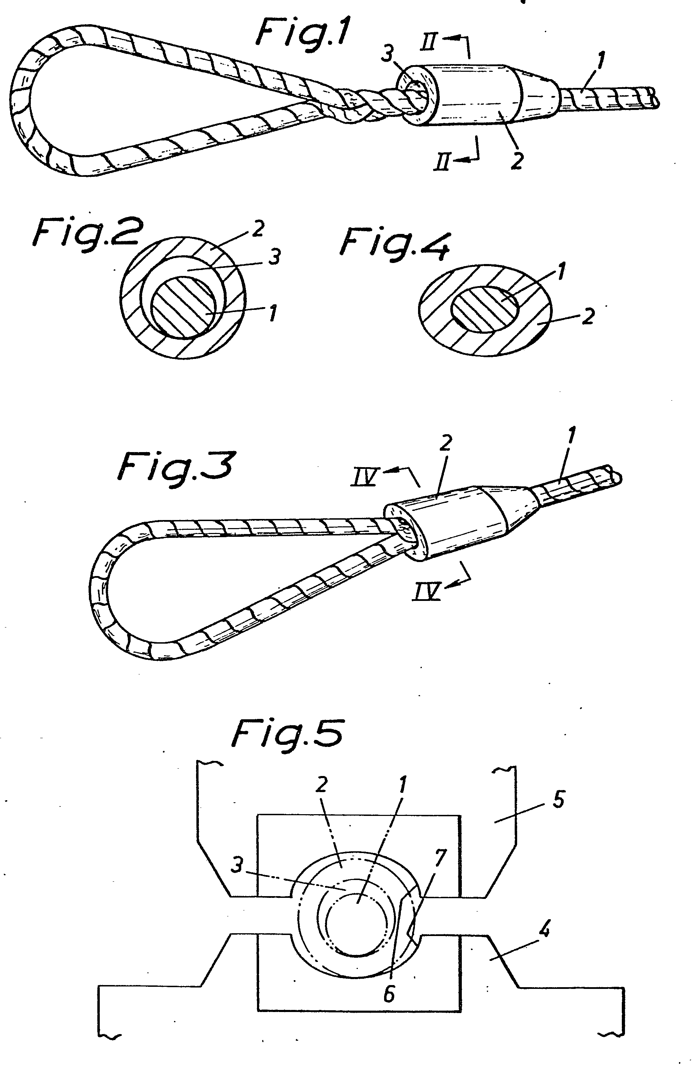

Fig. 1 shows a steel wire robe 1 the end of which is spliced in the conventional manner, ready to receive a metal sleeve 2 of preferably steel to be positioned around the spliced wire portion. The sleeve 2 is originally circular and in accordance with the embodiment illustrated it is formed with a conically tapering end portion at its end opposite the loop of the rope. The inner diameter of the sleeve 2 is sufficiently large to leave a gap 3 between the sleeve and the steel wire rope, as is shown in Fig. 2.

Fig. 3 shows the metal sleeve 2 after it has been passed over the spliced portion and compressed by the compression tool illustrated in Fig. 5 until the sleeve is deformed and, together with the steel wire rope 1, has assumed an elliptic cross-sectional shape; see also Fig. 4.

The compression tool illustrated in Fig. 5 consists of a lower movable tool section 4 and an upper stationary section 5, the movable tool section being mounted in a hydraulically driven press. The clamping grip faces 6 and 7 of the two tool sections form, when moved close together, a cavity having an elliptic cross-sectional shape with the smaller axis of the ellipse positioned in the direction of movement of the two tool sections and the larger axis in the plane separating the two tool sections. Owing to this design of the compression tool complete control of the deformation is obtained upon compression of the metal sleeves which are of standard type and have an essentially circular sectional shape. The compression can be effected in one single stage using only two tool sections which are moved into contact with one another, and this without risk that the material of the sleeve will flow out between the two sections.

An advantageous dimensional relationship between the non-compressed sleeve and the tool sections has proved to be one existing when the tool section size is chosen such that half the thickness of the sleeve wall extends outside the forming edges of the compression tool sections. Such a dimensional relationship ensures that the sleeve will be compressed fully inwards, towards the spliced portion of the steel wire rope around the entire circumference of the latter. Owing to the flow of material in the direction towards the larger axis of the ellipse, i.e. the line separating the two tool sections, the pressing forces at the final stage of the compression are considerable also in the areas positioned at right angles to the direction of pressing.

The invention is not limited to the embodiment
illustrated in the drawings but various embodiments
thereof are possible within the scope of the appended
claims. For instance, the tool sections of the
compression tool could have various elliptic cross-
-sectional shapes. The essential feature is merely
that there is a space between the tool sections to
ensure controlled flow of the sleeve material.

C l a i m

A tool for homogeneous compression of metal sleeves (2), having an essentially circular cross--sectional shape, about spliced portions of steel wire ropes (1) for the purpose of forming av strong and secure bond, said tool comprising two tool sections (4, 5), c h a r a c t e r i s e d i n t h a t the tool sections (4, 5), when moved close together, form a clamping grip (6, 7) in the shape of an ellipse, of which the smaller axis is positioned in the direction of movement of the tool sections (4, 5) whereas the larger axis of the ellipse is positioned in the plane separating said two tool sections.

Fig.1

Fig.2

Fig.4

Fig.3

Fig.5